# EUROPÄISCHE PATENTSCHRIFT

(11) **EP 0 525 753 B1**
(45) Veröffentlichungstag und Bekanntmachung des Hinweises auf die Patenterteilung: **13.09.1995**
(21) Anmeldenummer: 92112956.5
(22) Anmeldetag: 29.07.1992
(51) Int. Cl.: B01D 25/172, B01D 25/38

(54) **Vorrichtung und Verfahren zum Ausfiltern von Feststoff-Partikeln aus Flüssigkeiten**
Device and process for filtering solid particles from liquids
Dispositif et procédé pour le filtrage des particules solides à partir de liquides

(30) Priorität: 31.07.1991 DE 4125358; 31.07.1991 DE 4125359
(43) Veröffentlichungstag der Anmeldung: 03.02.1993
(73) Patentinhaber: Tonne, Hansjochen E., Dipl.-Ing., D-27726 Worpswede (DE)
(72) Erfinder: Tonne, Hansjochen E., Dipl.-Ing., D-27726 Worpswede (DE)
(74) Vertreter: Liesegang, Roland, Dr.-Ing.

(56) Entgegenhaltungen:
- EP-A- 0 218 034
- DE-A- 611 918
- DE-A- 927 810
- DE-A- 1 247 272
- DE-A- 3 716 707

## Beschreibung

Ähnliche bekannte Filtervorrichtungen sind meistens so gestaltet, daß das Flächenfilter die Form einer Zylinder-Mantelfläche hat, wobei der Filterzylinder um seine Längsachse drehbar ist, wohingegen die Reinigungsköpfe feststehen. Wird nun zu filtrierende, Feststoff-Partikel enthaltende Flüssigkeit durch den Filterzylinder hindurchgeleitet, dann setzen sich an der schmutzseitigen Oberfläche des Filterzylinders, wobei es sich im allgemeinen um die Zylinder-Außenfläche handelt, Feststoff-Partikel ab, und es bildet sich auf der Filteroberfläche ein fortlaufend weiterwachsender Filterkuchen. Mit dem Anwachsen des Filterkuchens steigt die Druckdifferenz zwischen Filter-Schmutzseite und Filter-Reinseite, und bei Erreichen eines vorgegebenen Druckdifferenz-Schwellenwerts und/oder nach Anlauf einer vorgegebenen Zeitspanne wird die Rückspüleinrichtung in Tätigkeit gesetzt. Dies bedeutet, daß dem reinseitigen Reinigungskopf ein Rückspülfluid zugeführt wird, etwa ein Teil der nach Durchströmen des Filters bereits reinen Flüssigkeit. Das Rückspülfluid tritt durch einen Öffnungsschlitz des Reinigungskopfs aus und durchströmt den zwischen den beiden Reinigungsköpfen befindlichen Filterbereich in Gegenrichtung, löst dabei den Filterkuchen vom Filter ab und führt diesen in Form kleinerer und größerer Feststoff-Partikel über die Kammer des schmutzseitigen Reinigungskopfs in die Abführleitung ab. Durch Drehen des Filterzylinders wird dieser über seine gesamte Mantelfläche vom Filterkuchen befreit.

Der Vorteil dieser bekannten Rückspüleinrichtung besteht darin, daß der Rückspülvorgang durchgeführt werden kann, ohne dabei den eigentlichen Filterungsvorgang unterbrechen zu müssen. Wegen schlechter Dichtung zwischen den im Reinigungsbetrieb relativ zueinander bewegten Teilen bedeutet dies andererseits, daß der Rückspülfluid-Strom vom entgegengesetzt gerichteten Haupt-Flüssigkeitsstrom abgebremst wird, und zwar sowohl vor als auch nach Durchdringen des Flächenfilters. Infolge dieses Verlusts an kinetischer Energie ist der vom Rückspülfluid bewirkte Reinigungseffekt häufig nicht voll befriedigend, insbesondere dann nicht, wenn die Feststoff-Partikel-Ablagerung zu einem Filterkuchen hoher Festigkeit oder Zähigkeit führt. Dieser Nachteil hat bisher den Einsatz derartiger rückspülbarer Filter bei solchen Anwendungsgebieten erschwert oder verhindert, bei denen stark verunreinigte Flüssigkeiten gefiltert werden sollen, etwa stark mit Metall-Partikeln verschmutzte Kühlflüssigkeiten in der spanenden Metallbearbeitung.

Untersuchungen haben ergeben, daß die Filterungseffektivität derartiger Flächenfilter von dem Vorhandensein eines Filterkuchens sowie von dessen Dicke und Konsistenz beeinflußt wird. Der sich durch Ablagerung von Feststoff-Partikeln bildende Filterkuchen ist nämlich ein offenporöses Gebilde, das seinerseits als Filter wirkt. Dies bedeutet, daß ein Flächenfilter mit darauf befindlichem Filterkuchen eine Art von Doppelschicht-Filter darstellt, jedenfalls die Filterwirkung besser ist als beim bloßen Flächenfilter ohne abgelagertem Filterkuchen. Andererseits setzt der Filterkuchen mit wachsender Dicke und Dichte dem Hindurchströmen von Flüssigkeit einen immer größeren Widerstand entgegen, so daß man gezwungen ist, mittels der Rückspüleinrichtung den Filterkuchen zu entfernen. Bezogen auf die Filterungswirkung bedeutet dies aber, daß zu Beginn des Filterungsvorgangs (Flächenfilter ohne Filterkuchen) nur von einer "ausreichenden" Wirkung (sehr kleine Partikel gehen durch das Filter hindurch) gesprochen werden kann, daß dann mit wachsendem Filterkuchen die Wirksamkeit sich verbessert (es werden auch kleine und kleinste Partikel ausgefiltert) und daß durch das Entfernen des Filterkuchens beim Rückspülvorgang die Wirksamkeit wieder abnimmt, wobei sich dieser Vorgang fortlaufend wiederholt. Es ergeben sich also starke periodische Schwankungen der Filterungswirksamkeit.

Bei der Vorrichtung nach der EP-A-0 218 034 sind zur Abdichtung der Kammern der hier gegenüber dem feststehenden Filter bewegten Reinigungsköpfe Gleitplatten vorgesehen, die im Reinigungsbetrieb unter Berührung der beiden entgegengesetzten Filterflächen gleiten. Dies kann leicht zur Verletzung oder gar Zerstörung des Filtermaterials führen.

Aufgabe der vorliegenden Erfindung ist es deshalb, eine Vorrichtung der eingangs erwähnten Art so zu verbessern, daß der Rückspülvorgang beschleunigt und wirkungsvoller sowie gleichmäßiger gemacht wird. Die Lösung dieser Aufgabe ergibt sich vorrichtungsmäßig aus den Merkmalen des Patentanspruchs 1, verfahrensmäßig aus den Merkmalen des Anspruchs 9.

Bei der Ausgestaltung der Erfindung gemäß Anspruch 2, die im Prinzip aus der DE-A-611918 bekannt ist, wird die Abdichtung zwischen den Stegen und den Innenwänden der Flansche von dem Filtermaterial weg an Dichtstellen zwischen den Stegen und den relativ dazu bewegten Wandteilen, z.B. seitlich wegstehenden Flanschen, verlagert. Auf diese Weise wird eine verläßliche, dauerhafte Dichtwirkung ohne die Gefahr der Verschlechterung des Filtermaterials geschaffen.

Durch die erfindungsgemäße Verwendung von Strahldüsen wird sichergestellt, daß das Spülfluid mit vergleichsweise hoher kinetischer Energie den Filterkuchen anströmt und damit in der Lage ist, auch widerstandsfähige Filterkuchen in kurzer Zeit abzulösen und in Partikel zu zerteilen. Erreicht wird dies, durch die Ausbildung der Feststoff-Abführleitung als Saugleitung, durch die ein Sog in Rückspülrichtung ausgeübt wird, was einerseits dazu führt, daß die Kammern beider Reinigungsköpfe flüssigkeitsleer werden und andererseits sowohl die Ablösung des Filterkuchens als auch die Abführung der Filterkuchenteilchen unterstützt bzw. erleichtert. Der Kern des Verfahrens besteht also darin, daß die dem Filterkuchen eigene Filterungswirkung intensiv genutzt wird, und zwar dadurch, daß diejenigen Zeitspannen, während welcher auf dem Flächenfilter ein Filterkuchen mit für die Filterung geeigneter Dicke und Dichte existiert, wesentlich verlängert und umgekehrt diejenigen Zeitspannen, während welcher auf dem Flächenfilter kein Filterkuchen existiert (Rückspülphase) beträchtlich verkürzt werden, letzteres dadurch, daß die Zeitabstände zwischen Rückspülphasen wesentlich verlängert werden.

Auf der Zeichnung ist eine Ausführungsform der Erfindung beispielsweise dargestellt. Es zeigen:

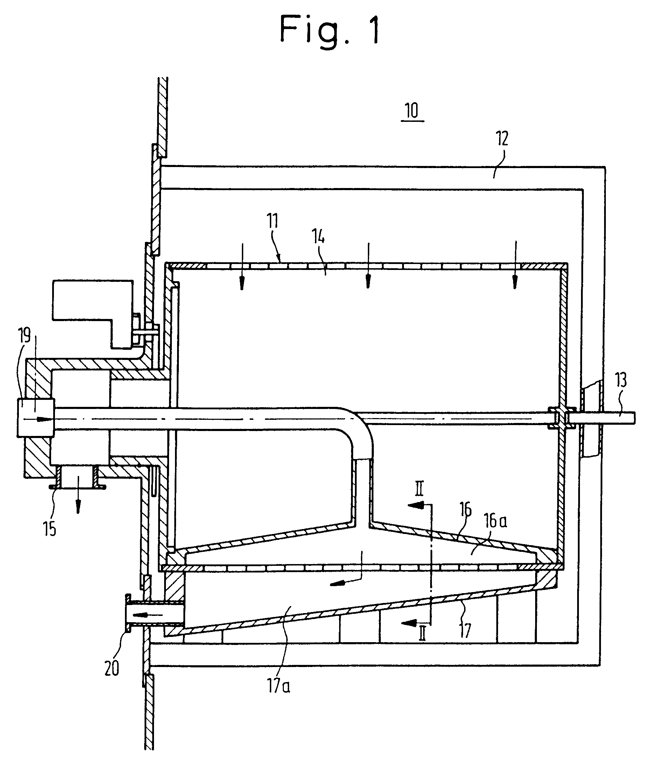

- Fig. 1: die Filtervorrichtung im Vertikalschnitt
- Fig. 2: schematisch und im vergrößerten Maßstab einen Teilschnitt nach der Linie II-II von Fig. 1
- Fig. 3: einen Teilschnitt ähnlich Fig. 2 durch eine abgewandelte Ausführungsform und
- Fig. 4 und 5: Skizzen von zwei weiteren Abwandlungsformen.

In einem nicht näher dargestellten Schmutzwasserbehälter 10 ist eine Filtertrommel 11 untergebracht. Die Filtertrommel 11 ist in einem Rahmen 12 drehbar um ihre horizontale Längsachse gelagert und mittels einer horizontalen Welle 13 antreibbar. Das im Behälter 10 befindliche Schmutzwasser strömt durch die als Filter ausgebildete Mantelfläche 14 der Trommel 11 hindurch in das Trommelinnere, wobei dann das im Trommelinneren befindliche Reinwasser über den Reinwasser-Ablauf 15 abgeführt wird. Die Filter-Mantelfläche 14 kann dabei ein gelochtes Blech, ein mit Schlitzen versehenes Blech, ein Metallgewebe oder eine Kombination derartiger Filterelemente sein.

Parallel zur Welle 13 erstreckt sich beidseits der zylindrischen Filter-Mantelfläche 14 eine Ortsfeste Rückspüleinrichtung, die aus zwei Reinigungsköpfen 16 und 17 besteht. Dabei ist der eine Reinigungskopf 16 im Trommelinneren untergebracht und umschließt eine Spülkammer 16a, die sich zur Filter-Mantelfläche 14 hin öffnet. In der Kammer 16a sind zumindest eine Reihe, im gezeigten Fall zwei Reihen von Strahldüsen 18a und 18b angeordnet, die auf das Flächenfilter 14 hin gerichtet sind und gesondert betätigbar und schwenkbar sein können. Die Strahldüsen 18a, 18b werden über eine Druckkammer 19 mit Rückspülfluid gespeist. Der andere Reinigungskopf 17 ist an der Trommelaußenseite angeordnet und umschließt eine Abführkammer 17a, die sich ebenfalls zur Filtertrommelfläche hin öffnet. Die Abführkammer 17a ist an eine Auslaufleitung 20 angeschlossen, die ihrerseits mit der Saugseite einer - nicht gezeichneten - Flüssigkeitspumpe verbunden ist, so daß die Abführleitung 20 eine Saugleitung darstellt. Die Länge der gegenüberstehenden und durch die Filtertrommel getrennten Kammeröffnungen der Reinigungsköpfe 16,17 ist gleich der Länge der zylindrischen Filtermantelfläche.

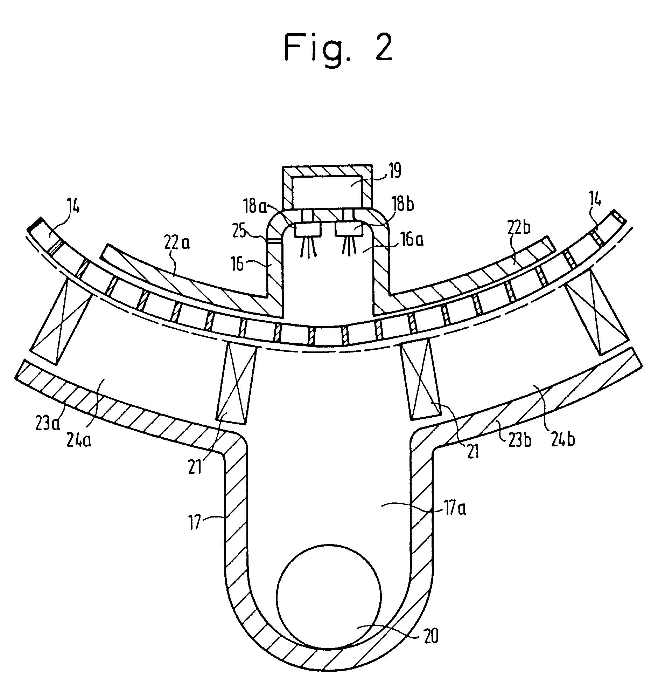

Vom Filtertrommelmantel 14 stehen Trennstege 21 ab, die parallel zur Trommelwelle 13 über die gesamte Axiallänge der Trommel 11 verlaufen und einen Abstand voneinander einhalten, der in etwa gleich ist der Öffnungsweite der Kammern 16a, 17a der beiden Reinigungsköpfe 16, 17. Die Höhe der Trennstege 21 ist zumindest gleich, vorzugsweise aber größer als die zulässige Dicke des Filterkuchens. Die beiden sich über die gesamte Trommellänge erstreckenden Reinigungsköpfe 16, 17 weisen außerdem jeweils in Trommelumfangrichtung abstehende Flansche 22a, 22b bzw. 23a, 23b auf, die jeweils mindestens bis zum nächstfolgenden Trennsteg 21 reichen und damit der Rückspüleinrichtung beidseits benachbarte Dichtkammern 24a und 24b bilden, wie dies deutlich aus Fig. 2 hervorgeht. Schließlich ist mit 25 eine Leitung zum Be- und Entlüften der Kammer 16a bezeichnet.

Die Vorrichtung arbeitet folgendermaßen. Das außerhalb der Filtertrommel 11 befindliche Schmutzwasser wird am Filtertrommelmantel 14 gefiltert, daß heißt, es dringt nur Reinwasser durch den Filtertrommelmantel 14 hindurch in das Innere der Filtertrommel 11, wo es dann über die Reinwasserleitung 15 abgeführt wird, wohingegen der Schmutz, also die in der Flüssigkeit enthaltenen Feststoff-Partikel, an der äußeren Oberfläche des Filtertrommelmantels 14 zurückgehalten werden und sich dort unter Bilden eines Filterkuchens ablagern. Dieser Filterkuchen ist, bis zu einer bestimmten Dicke, erwünscht, weil dadurch der Filterungseffekt verbessert wird. Ab einer bestimmten Dicke des Filterkuchens jedoch wird der Durchfluß des Reinwassers so stark behindert, daß eine Entfernung des Filterkuchens erforderlich ist. Festgestellt wird dies durch Messung des Differenzdrucks zwischen dem Druck im Trommelinnenraum und dem Druck außerhalb der Trommel, und bei Erreichen eines vorgegebenen Differenzdrucks tritt die Rückspüleinrichtung in Betrieb. Das bedeutet, daß die Trommel 11 durch die Welle 13 in Drehung versetzt (bzw. weitergedreht), durch Einschalten der erwähnten Flüssigkeitspumpe die Kammern 16a und 17a von Flüssigkeit befreit und unter Druck stehendes Rückspülfluid über die Zuführleitung 19 den Düsen 18a, 18b zugeführt wird. Die aus den Düsen 18a, 18b austretenden, gegen den Filtermantel 14 gerichteten Rückspül-Strahlen heben den zwischen den beiden Reinigungsköpfen befindlichen Bereich des Filterkuchens ab und lösen diesen in Feststoff-Partikel auf, wobei dann diese Feststoff-Partikel zusammen mit dem Rückspülfluid über die Leitung 20 abgesaugt werden. Nach Abreinigen dieses Filterbereichs gelangt infolge der Drehung der Trommel 11 der nächstfolgende zwischen zwei Trennstegen 21 befindliche Filterkuchenabschnitt zwischen die beiden Reinigungsköpfe 16, 17. Dieser Vorgang wiederholt sich bis die gesamte Trommelfläche abgereinigt ist; anders ausgedrückt, die Trommel wird solange gedreht und Spülfluids solange zugeführt, bis der Differenzdruck auf einen vorgegebenen unteren Schwellenwert abgesunken ist. Während dieses Reinigungsvorgangs läuft jedoch der eigentliche Filterungsvorgang weiter, mit Ausnahme des durch die Reinigungsköpfe 16, 17 und ihre Flansche 22, 23 momentan abgedeckten Bereichs.

Durch die erfindungsgemäße Ausgestaltung der Rückspüleinrichtung kann diese - im Gegensatz zu den üblichen Rückspüleinrichtungen - unabhängig vom Systemdruck der Filtervorrichtung arbeiten, weil die beiden Kammern 16a, 17a gegenüber der umgebenden Flüssigkeit abgedichtet sind, wobei diese Abdichtung durch die Trennstege 21 beträchtlich verbessert wird. Infolge dieser Unabhängigkeit vom Systemdruck, kann die Rückspüleinrichtung sowohl bei Unterdruckfiltern als auch bei anderen Filtersystemen zum Einsatz kommen. Dabei sind der Druck des zugeführten Rückspülfluids und der Unterdruck der Abführleitung 20 so zu wählen und gegeneinander abzustimmen, daß einerseits die kinetische Energie der aus den Düsen 18a, 18b austretenden Rückspülfluid-Strahlen ausreicht, eine schnelle Ablösung des Filterkuchens zu bewirken, und andrerseits die Kammer 16a und die schmutzseitige Abführkammer 17a im wesentlichen flüssigkeitsfrei bleiben. Letzteres bedeutet, daß die an die Leitung 20 angeschlossene Flüssigkeitspumpe in ihrer Leistung so zu dimensionieren ist, daß die über die Düsen 18a, 18b eingespritzte Rückspülflüssigkeitsmenge und in die Kammern 16a und 17a trotz Abdichtung eindringende Leckflüssigkeit sofort abgeführt werden. Handelt es sich bei dem Rückspülfluid um Druckluft, ist selbstverständlich nur für die schnelle Absaugung der Leckflüssigkeit zu sorgen.

Die Leitung 25 sorgt für eine Entlüftung und - bei Auftreten eines Unterdrucks in der Kammer 16a - für eine Belüftung, wobei im Falle eines geschlossenen Systems in die Leitung 25 ein -nicht gezeichnetes- Rückschlagventil einzusetzen ist.

Die Raumform des Flächenfilters muß nicht zylindrisch sondern kann auch in anderer Weise gewölbt oder aber plan sein. Handelt es sich bei den Filter, wie beim Ausführungsbeispiel, um ein Trommelfilter, dann kann die Strömungsrichtung auch von innen nach außen gewählt sein und die Trommelachse auch senkrecht stehen. Über die verschiedenen Ausbildungsmöglichkeiten für den Filtertrommelmantel ist bereits gesprochen worden. Weiterhin ist es nicht zwingend erforderlich, daß die Filtertrommel mit-Trennstegen versehen ist, jedoch sorgen diese bei Vorhandensein für eine besonders gute Abdichtung der Rückspülzone gegenüber der umgebenden Flüssigkeit. Vorteilhafterweise sind die Reinigungsköpfe wie beim Ausführungsbeispiel ortsfest, und die erwähnte Relativbewegung wird vom sich drehenden Filtertrommelmantel bewirkt; es ist aber auch möglich, die Reinigungsköpfe über ein ortsfestes Filter zu führen. Die Zahl und Ausbildung der Strahldüsen 18a, 18b ist den jeweiligen Anforderungen anzupassen, und zwar unter Berücksichtigung des vorhandenen Rückspülfluid-Drucks. Dabei sei hier noch erwähnt, daß das Rückspülfluid auch Druckluft sein kann.

Wenn vorab von "Schmutzwasser" gesprochen wird, so soll damit keine Beschränkung der Anwendung der Vorrichtung erfolgen; selbstverständlich kann das "Schmutzwasser" auch mit Metallpartikeln (Spänen) versetzte Kühlflüssigkeit sein, wie sie insbesondere in der Metallindustrie verwendet wird. Die Ausfürung nach Fig. 2 hat keinen zweiten Reinigungskopf und ist insoweit nicht durch Patentanspruch gedeckt.

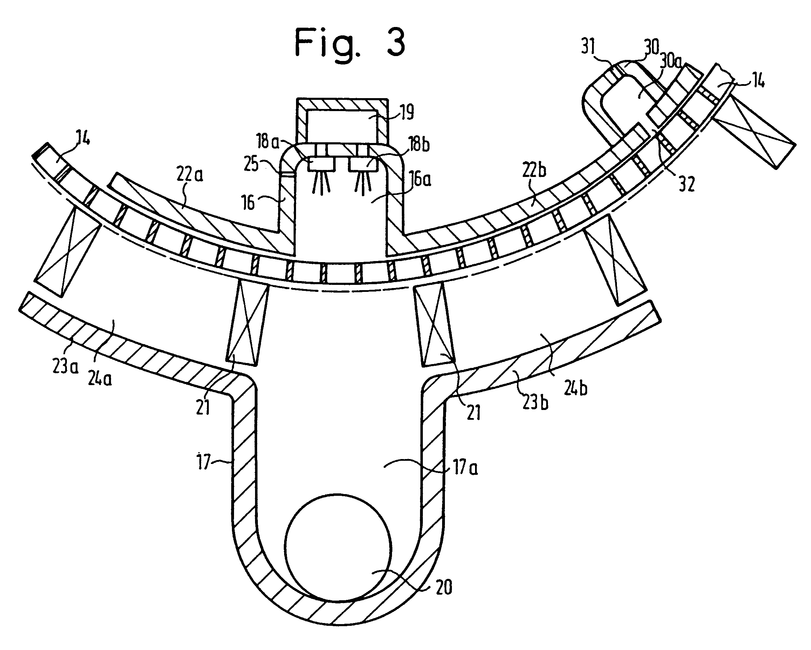

Fig. 3 zeigt eine Ausführung der erfindungsgemäßen Vorrichtung, wobei der Grundaufbau demjenigen von Fig. 2 entspricht. Wie aus der Zeichnung ersichtlich, ist jedoch der eine reinseitige Flansch 22b verlängert, und zwar bis zum darauffolgenden Trennsteg 21. Dabei ist die Flanschverlängerung integraler Bestandteil eines zweiten reinseitigen Reinigungskopfs 30, der eine Kammer 30a umschließt, die einerseits an eine Rückspülfluid-Zuführleitung 31 angeschlossen ist und sich andererseits über einen Schlitz 32 zum Filterzylinder 14 hin öffnet. Dabei kann die Rückspülfluid-Zuführleitung 31 mit der Rückspülfluid-Druckkammer 19 des ersten reinseitigen Reinigungskopfs 16 über ein Ventil in Verbindung stehen. Der zweite Reinigungskopf 30 kann dem ersten Reinigungskopf in in Drehrichtung des Filterzylinders 14 vor- oder nachgeschaltet sein.

Die Vorrichtung nach Fig. 3 arbeitet folgendermaßen. Das außerhalb der Filtertrommel 11 befindliche Schmutzwasser wird am Filtertrommelmantel 14 gefiltert, daß heißt, es dringt nur Reinwasser durch den Filtertrommelmantel 14 hindurch in das Innere der Filtertrommel 11, wo es dann über die Reinwasserleitung 15 abgeführt wird, wohingegen der Schmutz, also die in der Flüssigkeit enthaltenen Feststoff-Partikel, an der äußeren Oberfläche des Filtertrommelmantels 14 zurückgehalten werden und sich dort unter Bilden eines Filterkuchens ablagern. Dieser Filterkuchen ist, bis zu einer bestimmten Dicke, erwünscht, weil dadurch der Filterungseffekt verbessert wird. Ab einer bestimmten Dicke des Filterkuchens jedoch wird der Durchfluß der zu filtrierenden Flüssigkeit so stark behindert, daß eine Entfernung des Filterkuchens erforderlich ist. Die Bildung des Filterkuchens und das Anwachsen seiner Dicke und Dichte kann durch Messung des Differenzdrucks zwischen dem Druck im Trommelinnenraum und den Druck außerhalb der Trommel festgestellt werden. Erfindungsgemäß werden nun vorab zwei Grenzwerte für diese Druckdifferenz festgelegt, etwa durch Probeläufe, wobei der erste Grenzwert der Bedingung entspricht, daß der Filterkuchen eine solche Dicke und Dichte erreicht hat, daß er einerseits eine gute Filterungswirkung hat, andererseits aber das Hindurchströmen der zu filternden Flüssigkeit von der Schmutz- zur Reinseite nicht wesentlich behindert. Der zweite Grenzwert der Druckdifferenz dagegen entspricht der Bedingung, daß der Filterkuchen so dick und dicht geworden ist, daß er das Hindurchströmen von zu filternder Flüssigkeit von der Schmutz- zur Reinseite stark behindert, seine Entfernung also erforderlich wird. Wird nun, ausgehend vom Beginn des Filterungsvorgangs, nach einer gewissen Zeit der erste Grenzwert der Druckdifferenz erreicht, dann tritt die Rückspüleinrichtung in ihre erste Betriebsphase. Dies bedeutet, daß die Trommel 11 durch die Welle 13 in Bewegung versetzt (bzw. weitergedreht) und Rückspülfluid über die Zuführleitung 31 der Kammer 30a des zweiten reinseitigen Reinigungskopfs 30 zugeführt wird, von wo aus das Reinigungsfluid durch den Schlitz 32 gegen den Filtermantel 14 strömt. Die Energie des Rückspülfluids ist dabei so bemessen, daß es nicht zu einem Abheben des Filterkuchens vom Trommelmantel 14 kommt, das Rückspülfluid vielmehr lediglich durch den Filterkuchen hindurchströmt, wobei es die Poren des Filterkuchens von ein Zusetzen der Poren bewirkenden kleinen Feststoff-Partikeln befreit und gegebenenfalls an der schmutzseitigen Filterkuchen-Oberfläche in Anlagerung begriffene Feststoff-Partikel wegschwemmt. Mit anderen Worten, das aus dem Reinigungskopf 30 austretende Rückspülfluid soll den Filterkuchen in seiner Dicke und Konsistenz konstant halten, so daß dieser zusätzlich zum Trommelmantel 14 als Filter, etwa Feinfilter wirkt. Freilich ist dieser Zustand des Filterkuchens nicht über beliebige Zeitspannen aufrecht zu erhalten; nach einer, wenn auch vergleichsweise langen Zeitspanne wird es deshalb dann doch dazu kommen, daß der Filterkuchen dem Hindurchströmen von zu filternder Flüssigkeit von der Schmutz- zur Reinseite einen solchen Widerstand entgegensetzt, daß der vorerwähnte zweite Grenzwert der Druckdifferenz erreicht wird. Des bedeutet dann, daß die Trommel 11 durch die Welle 13 weitergedreht, durch Einschalten der erwähnten Flüssigkeitspumpe die Kammern 16a und 17a der Reinigungsköpfe 16 und 17 von Flüssigkeit befreit und unter Druck stehendes Rückspülfluid über die Zuführleitung 19 den Düsen 18a, 18b zugeführt wird. Die aus den Düsen 18a, 18b austretenden, gegen den Filtermantel 14 gerichteten Rückspül-Strahlen heben den zwischen den beiden Reinigungsköpfen 16, 17 befindlichen Bereich des Filterkuchens ab und lösen diesen in Feststoff-Partikel auf, wobei dann diese Feststoff-Partikel zusammen mit dem Rückspülfluid über die Leitung 20 abgesaugt werden. Nach Entfernung dieses Filterkuchenbereichs gelangt infolge der Drehung der Trommel 11 der nächstfolgende zwischen zwei Trennstegen 21 befindliche Filterkuchenabschnitt zwischen die beiden Reinigungsköpfe 16, 17. Dieser Vorgang wiederholt sich bis die gesamte Trommelfläche abgereinigt ist; anders ausgedrückt, die Trommel wird solange gedreht und Spülfluid solange zugeführt, bis der Differenzdruck so weit abgesunken ist, daß der Abreinigungsvorgang als abgeschlossen angesehen werden kann. Während der erwähnten Reinigungsvorgänge läuft der eigentliche Filterungsvorgang weiter, mit Ausnahme des durch die Reinigungsköpfe 16, 17, 30 und ihre Flansche 22, 23 momentan abgedeckten Bereichs.

Durch den Rückspülvorgang mittels des Renigungskopfs 30, den man als Vorspülen bezeichnen könnte, wird der eigentliche Rückspülvorgang mittels der Reinigungsköpfe 16, 17 beträchtlich hinausgezögert, so daß die Filtervorrichtung nur sehr selten ohne Filterkuchen arbeitet, die überwiegende Zeit also das Flächenfilter durch ein zusätzliches Feinfilter in Form eines Filterkuchens überdeckt ist. Auf diese Weise wird eine sehr konstante und feine Filterung erreicht.

Der zusätzlich reinseitige Reinigungskopf 30 kann auch ein gegenüber dem Reinigungskopf 16 gesondertes Bauteil sein. Weiterhin kann der Reinigungskopf 30 ebenfalls mit Düsen (Abschlämmdüsen) ausgerüstet werden, wobei jedoch dann dafür Sorge zu tragen ist, daß der Druck des Reinigungsfluids nicht so groß wird, daß der Filterkuchen vom Flächenfilter abgelöst wird. So kann beispielsweise für die Abschlämmdüsen ein Druck von 0,3 - 1,0 bar gewählt werden, während derjenige der Reinigungsdüsen 18a, 18b beispielsweise 2 -18 bar beträgt. Schließlich ist es auch nicht erforderlich, daß der Filterzylinder 14 während des Rückspülvorgangs mit Reinigungskopf 30 und des Rückspülvorgangs mit den Reinigungsköpfen 16, 17 mit gleicher Drehzahl gedreht wird; vorzugsweise wird man beim Rückspülvorgang mit den Reinigungsköpfen 16, 17 eine höhere Drehzahl wählen. Als Rückspülfluid kommen Flüssigkeiten oder Druckluft in Frage. Weil die erforderliche Spülmenge und insbesondere der entsprechende Druck beim Rückspülkopf 30 wesentlich geringer sind als beim Kopf 16, werden beide Systeme vorzugsweise getrennt versorgt. Weiterhin ist es so, daß der Reinigungskopf 30 zweckmäßigerweise immer mit Fluid beaufschlagt und gleichzeitig die Filtertrommel mit gleichbleibender Geschwindigkeit gedreht wird. Die Arbeitsweise der Köpfe 16 und 17 verändern diese Parameter nicht. Schließlich ist es nicht notwendig, den reinseitigen Flansch 22b bis zum darauffolgenden Trennsteg 21 zu verlängern. Die Baulänge des Reinigungskopfes sollte vielmehr möglichst kurz gehalten werden, um viel freie Siebfläche beizubehalten und damit den Durchsatz zu erhöhen. Es ist anzustreben, daß der Schlitz 32 unmittelbar vor dem entsprechenden Trennsteg 21 positioniert ist. Wesentlich ist, daß der bei dieser Vorrichtung teilweise abgespülte Schmutz direkt aus dem Kreislauf ausgeschieden wird.

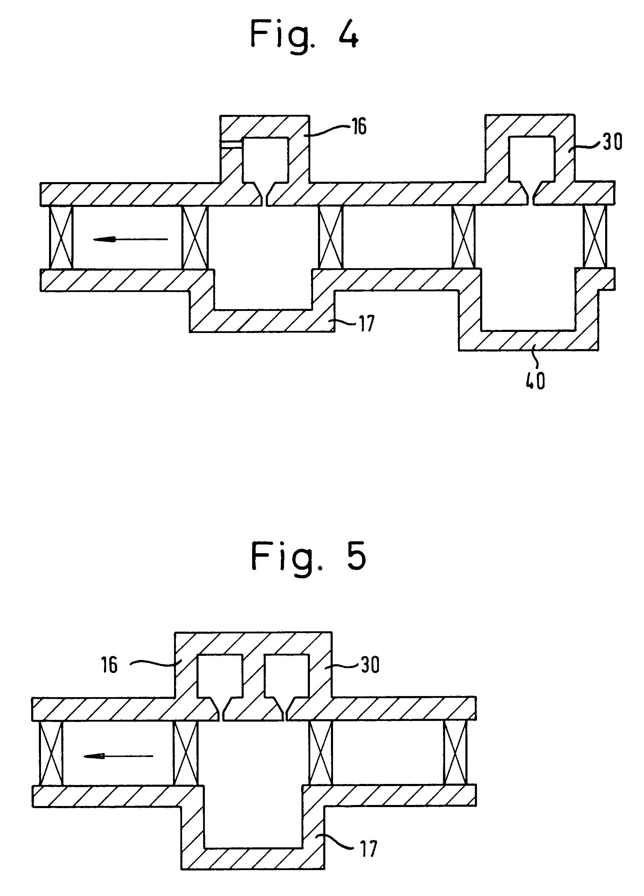

Die Figuren 4 und 5 zeigen skizzenhaft gegenüber Fig. 3 geringfügig abgewandelte Vorrichtungen. Bei Fig. 4 steht dem reinseitigen Reinigungskopf 30 ein zusätzlicher schmutzseitiger Reinigungskopf 40 gegenüber, und bei der Vorrichtung nach Fig. 5 sind die beiden reinseitigen Reinigungsköpfe 16, 30 zu einer Baueinheit vereinigt. Die Funktion der beiden Vorrichtungen entspricht derjenigen der Vorrichtung von Fig. 3.

## Patentansprüche

1. Vorrichtung zum Ausfiltern von Feststoff-Partikeln aus Flüssigkeiten,
mit einem flächigen, den Flüssigkeitsraum in eine Schmutz- und eine Reinseite teilenden Filter und
mit einer ein Ablösen des auf dem Flächenfilter (14) abgelagerten Filterkuchens bewirkenden Rückspülvorrichtung (16-20), die zwei beidseits des Flächenfilters angeordnete, einander gegenüberstehende Reinigungsköpfe (16, 17) umfaßt, deren jeder eine zum Flächenfilter hin offene Kammer (16a, 17a) umschließt, wobei die Kammer (16a) des Reinigungskopfs der Flächenfilter-Reinseite an eine Zuführleitung (19) für Rückspülfluid und diejenige (17a) des Reinigungskopfs der Flächenfilter-Schmutzseite an eine Feststoff-Abführleitung (20) angeschlossen ist, wobei zum Abreinigen der Gesamtfläche des Flächenfilters dieser und die Rückspüleinrichtung relativ zueinander verschiebbar sind, wobei ferner in der Kammer (16a) des Reinigungskopfs (16) der Flächenfilter-Reinseite an die Rückspülfluid-Zuführleitung (19) angeschlossene und auf das Flächenfilter (14) gerichtete Strahldüsen (18a, 18b) vorgesehen sind und wobei die Feststoff-Abführleitung (20) des Reinigungskopfs (17) der Flächenfilter-Schmutzseite eine Saugleitung ist, gekennzeichnet durch einen zweiten reinseitigen Reinigungskopf (30), der ebenfalls an eine Zuführleitung (31) für Rückspülfluid angeschlossen ist, und eine zum Flächenfilter hin offene Kammer (30a) umgibt.

2. Vorrichtung nach Anspruch 1, **dadurch gekennzeichnet**, daß von einem Filtertrommelmantel (14) Trennstege (21) in Richtung
zur Schmutzseite abstehen, die parallel zu einer Trommelwelle (13) über die gesamte Axiallänge der Trommel (11) verlaufen und einen Abstand voneinander einhalten, der etwa gleich der Öffnungsweite der Kammern (16a, 17a) ist, und die eine mindestens der zulässigen Filterkuchendicke entsprechende Höhe haben, und daß diese Trennstege (21) von mit den Kammerwandungen der Kammern (16a, 17a) verbundenen Wandteilen (22a, 22b, 23a, 23b) überdeckt sind, um eine gute Abdichtung der beiden Kammern (16a, 17a) im Reinigungsbetrieb zu erzielen.

3. Vorrichtung nach Anspruch 1 oder 2, dadurch gekennzeichnet, daß die Strahldüsen (18a, 18b) gesondert mit Rückspülfluid versorgbar und schwenkbar sind.

4. Vorrichtung nach Anspruch 1, 2 oder 3, dadurch gekennzeichnet, daß die Kammer (16a) des Reinigungskopfs (16) der Reinseite an eine gegebenenfalls mit einem Rückschlagventil ausgerüstete Be- und Entlüftungsleitung (25) angeschlossen ist.

5. Vorrichtung nach einem der Ansprüche 1 bis 4, dadurch gekennzeichnet, daß zumindest eine Reihe von Strahldüsen (18a, 18b) vorgesehen ist.

6. Vorrichtung nach einem der Anspruch 1-5, dadurch gekennzeichnet, daß das Flächenfilter als Lochblech, Schlitzblech oder Gewebe in Form einer Mantelfläche eines Zylinders (14) ausgebildet ist, der um seine Längsachse drehbar ist, daß die Rückspül-Einrichtung (16-20) ortsfest angeordnet ist, daß die Länge der Kammeröffnung der drei Reinigungsköpfe (16, 17, 30) gleich der axialen Länge des um seine Längsachse drehbaren Zylinders (14) ist, und daß der zweite reinseitige Reinigungskopf (30) dem ersten reinseitigen Reinigungskopf (16) in Drehrichtung des Filterzylinders vor- oder nachgeschaltet ist.

7. Vorrichtung nach Anspruch 6, dadurch gekennzeichnet, daß die beiden reinseitigen Reinigungsköpfe (16, 30) zu einer Baueinheit integriert sind.

8. Vorrichtung nach einem der Ansprüche 1 bis 7, dadurch gekennzeichnet, daß die Wandteile (22a, 22b, 23a, 23b) von den Kammerwandungen seitlich wegragende Flansche sind, welche die freien Enden der von dem Flächenfilter (14) abstehenden Stege überdecken.

9. Verfahren zum Ausfiltern von Feststoff-Partikeln aus Flüssigkeiten mittels einer Vorrichtung nach einem der Ansprüche 1 bis 8, gekennzeichnet durch folgende Verfahrensschritte:
a) es wird vorab ein erster Grenzwert für die sich während des Filterungsvorgangs aufgrund des Ablagerns eines Filterkuchens auf der Schmutzseite des Flächenfilters ändernde Druckdifferenz zwischen Schmutz- und Reinseite festgelegt, wobei dieser erste Grenzwert einer optimalen Eigen-Filterungswirkung des Filterkuchens bei ausreichender Flüssigkeits-Durchlässigkeit entspricht,
b) es wird vorab ein zweiter Grenzwert für die Druckdifferenz zwischen Schmutzseite und Reinseite festgelegt, wobei dieser zweite Grenzwert einer ungenügenden Flüssigkeits-Durchlässigkeit des Filterkuchens entspricht,
c) es wird während des Filterungsvorgangs fortlaufend die Druckdifferenz zwischen Schmutz- und Reinseite gemessen,
d) bei Erreichen des ersten Druckdifferenz-Grenzwerts wird Rückspül-Flüssigkeit in Richtung von der Reinseite zur Schmutzseite auf das Flächenfilter gerichtet, und zwar mit solcher Intensität, daß ohne Ablösung des bereits am Flächenfilter abgelagerten Filterkuchens das weitere Anwachsen des Filterkuchens behindert bzw. verzögert wird,
e) bei Erreichen des zweiten Druckdifferenz-Grenzwerts wird Rückspül-Flüssigkeit in Richtung von der Reinseite zur Schmutzseite auf den Flächenfilter gerichtet, und zwar mit solcher Energie, daß der abgelagerte Filterkuchen vom Flächenfilter abgelöst und in Feststoff-Partikel aufgelöst wird, worauf diese Feststoff-Partikel aufgefangen und abgeführt werden.

10. Verfahren nach Anspruch 9, dadurch gekennzeichnet, daß die Rückspül-Flüssigkeit jeweils auf Teilbereiche des Flächenfilters gerichtet und das Flächenfilter während des Rückspül-Vorgangs fortlaufend senkrecht zur Strömungsrichtung der Rückspül-Flüssigkeit bewegt wird.

## Claims

1. Device for filtering out solid particles from liquids,
with a laminar filter which divides the liquid space into a dirty and a clean side and
with a backwashing device (16-20) which detaches the filter cake deposited on the laminar filter (14) and comprises two cleaning heads (16, 17) which are arranged opposite one another on both sides of the laminar filter and each of which encloses a chamber (16a, 17a) which is open towards the laminar filter, the chamber (16a) of the cleaning head of the laminar filter clean side being connected to a feed line (19) for backwashing fluid and that (17a) of the cleaning head of the laminar filter dirty side being connected to a solids removal line (20), the laminar filter and the backwashing device being displaceable relative to one another in order to clean the total surface of the laminar filter, jet nozzles (18a, 18b), which are connected to the backwashing fluid feed line (19) and directed at the laminar filter (14), being provided in the chamber (16a) of the cleaning head (16) of the laminar filter clean side, and the solids removal line (20) of the cleaning head (17) of the laminar filter dirty side being a suction line, characterised
by a second cleaning head (30) on the clean side which is also connected to a feed line (31) for backwashing fluid and encloses a chamber (30a) which is open towards the laminar filter.

2. Device according to claim 1, characterised in that separating webs (21) protrude from a filter drum surface (14) towards the dirty side, extend parallel to a drum shaft (13) over the entire axial length of the drum (11), maintain a distance from one another which is approximately equal to the opening width of the chambers (16a, 17a) and are of a height which corresponds at least to the permissible filter cake thickness, and that these separating webs (21) are overlapped by wall parts (22a, 22b, 23a, 23b), which are connected to the chamber walls of the chambers (16a, 17a), in order to seal the two chambers (16a, 17a) satisfactorily during cleaning.

3. Device according to claim 1 or 2, characterised in that the jet nozzles (18a, 18b) can be separately supplied with backwashing fluid and pivoted.

4. Device according to claim 1, 2 or 3, characterised in that the chamber (16a) of the cleaning head (16) of the clean side is connected to a ventilation and exhaust line (25) which may be provided with a non-return valve.

5. Device according to one of claims 1 to 4, characterised in that at least one row of jet nozzles (18a, 18b) is provided.

6. Device according to one of claims 1 - 5, characterised in that the laminar filter is formed as a perforated plate, a slotted plate or a cloth in the form of a surface area of a cylinder (14), which can be rotated about its longitudinal axis, that the backwashing device (16-20) is stationary, that the length of the chamber opening of the three cleaning heads (16, 17, 30) is equal to the axial length of the cylinder (14), which can be rotated about its longitudinal axis, and that the second cleaning head (30) on the clean side is disposed before or after the first cleaning head (16) on the clean side in the direction of rotation of the filter cylinder.

7. Device according to claim 6, characterised in that the two cleaning heads (16, 30) on the clean side are integrated to form a constructional unit.

8. Device according to one of claims 1 to 7, characterised in that the wall parts (22a, 22b, 23a, 23b) are flanges which project laterally away from the chamber walls and overlap the free ends of the webs protruding from the laminar filter (14).

9. Method for filtering out solid particles from liquids by means of a device according to one of claims 1 to 8, characterized by the following method steps:
a) a first limit value for the pressure difference, which varies during the filtering operation on account of the deposition of a filter cake on the dirty side of the laminar filter, between the dirty and the clean side is firstly determined, this first limit value corresponding to an optimum inherent filtering effect of the filter cake when the liquid permeability is sufficient,
b) a second limit value for the pressure difference between the dirty side and the clean side is firstly determined, this second limit value corresponding to an insufficient liquid permeability of the filter cake,
c) the pressure difference between the dirty and the clean side is continuously measured during the filtering operation,
d) when the first pressure difference limit value is reached backwashing fluid is directed at the laminar filter from the clean side towards the dirty side with an intensity which is such that, without the filter cake already deposited on the laminar filter being detached, further growth of the latter is hampered or delayed,
e) when the second pressure difference limit value is reached backwashing fluid is directed at the laminar filter from the clean side towards the dirty side with a force which is such that the deposited filter cake is detached from the laminar filter and broken up into solid particles, which are then collected and removed.

10. Method according to claim 9, characterised in that the backwashing fluid is in each case directed at sub-areas of the laminar filter and the latter is moved continuously normal to the direction of flow of the backwashing fluid during the backwashing operation.

## Revendications

1. Dispositif pour extraire, par filtrage, des particules solides hors de liquides,
comportant un filtre situé en surface, partageant l'espace du liquide en un côté pollué et un côté épuré et
comportant un dispositif de rinçage à contre-courant (16, 17) qui détache le gâteau filtrant déposé sur la surface filtrante (14) et qui comprend deux têtes de nettoyage (16, 17) qui sont disposées des deux côtés de la surface filtrante, ou sont situés en face l'un de l'autre et dont chacun enclôt une chambre (16a, 17a) ouverte en direction de la surface filtrante, la chambre (16a) de la tête de nettoyage située du côté épuré de la surface filtrante étant reliée à une conduite d'amenée (19) de fluide de rinçage à contre-courant et celle (17a) de la tête de nettoyage situé du côté pollué de la surface fitrante l'étant à une conduite (20) d'évacuation des matières solides, dispositif dans lequel, pour le nettoyage de l'ensemble de la surface filtrante, celle-ci et le dispositif de rinçage d'à contre-courant peuvent coulisser l'un par rapport à l'autre, dans lequel en outre, dans la chambre (16a) de la tête de nettoyage (16) située du côté épuré de la surface filtrante, sont prévues des buses de projection (18a, 18b) reliées à la conduite d'amenée (19) du fluide de rinçage à contre-courant et orientées vers la surface filtrante (14) et dans lequel la conduite (20) d'évacuation des matières solides de la tête de nettoyage (17) située du côté pollué de la surface filtrante est une conduite d'aspiration,
caractérisé par une seconde tête de nettoyage (30) qui est située du côté épuré, qui est également reliée à une conduite d'amenée (31) de fluide de rinçage à contre-courant et qui enclôt une chambre ouverte en direction de la surface filtrante.

2. Dispositif selon la revendication 1,
caractérisé par le fait que d'une surface latérale (14) d'un tambour filtrant, des traverses séparatrices (21) débordent en direction du côté pollué, courent, parallèlement à un arbre (13) du tambour, sur toute la longueur axiale du tambour (I 1) et se trouvent à une distance l'une de l'autre qui est à peu près égale à la largeur d'ouverture des chambres (16a, 17a) et présentent une hauteur correspondant au moins à l'épaisseur autorisée du gâteau filtrant, et que ces traverses séparatrices (21) sont recouvertes par des portions de paroi (22a, 22b, 23a, 23b) reliées avec les parois des chambres ( I 6EI, I 7a), pour donner une bonne étanchéité des deux chambres (16a, 17a) au cours du nettoyage.

3. Dispositif selon la revendication I ou 2, caractérisé par le fait que les buses de projection (18a, 18b) peuvent être alimentées séparément en fluide de rinçage à contre-courant et peuvent pivoter séparément.

4. Dispositif selon les revendications 1, 2 ou 3, caractérisé par le fait que la chambre (16a) de la tête de nettoyage (16) située du côté épuré est reliée à une conduite de mise sous pression atmosphérique et de mise sous dépression (25), éventuellement équipée d'un clapet de non-retour.

5. Dispositif selon l'une des revendications I à 4, caractérisé par le fait qu'est prévue au moins une rangée de buses de projection (18a, 18b).

6. Dispositif selon l'une des revendications 1-5 caractérisé, par le fait que la surface filtrante est conçue en tant que tôle perforée, tôle à fentes ou toile métallique, sous forme d'une surface latérale d'un cylindre (14) qui peut tourner autour de son axe longitudinal, que le dispositif de rinçage à contre-courant (16-20) est disposé fixe, que la longueur de l'ouverture de chambre des trois têtes de nettoyage (16, 17, 30) est égale à la longueur axiale du cylindre (14) qui peut être entraîné en rotation autour de son axe longitudinal et que la seconde tête de nettoyage (30), située du côté épure, est située, dans le sens de rotation du cylindre filtrant, en amont ou en aval de la première tête de nettoyage (16) située du côté, épuré.

7. Dispositif selon la revendication 6, caractérisé par le fait que les deux têtes de nettoyage (16, 30) situées du côté épuré sont intégrées pour donner un ensemble.

8. Dispositif selon l'une des revendications I à 7, caractérisé par le fait que les portions de paroi (22a, 22b, 23a, 23b) sont des rebords qui débordent latéralement des parois des chambres et recouvrent les extrémités libres des traverses qui débordent de la surface filtrante (14).

9. Procédé d'extraction, par filtrage, de particules solides hors de liquides au moyen d'un dispositif selon l'une des revendications I à 8, caractérisé par les pas de procédé suivants:
a) on détermine tout d'abord une première valeur limite pour la différence de pression, qui se modifie pendant le processus de filtrage par suite du dépôt d'un gâteau filtrant sur la face polluée de la surface filtrante, entre la face polluée et la face épurée, cette première valeur limite correspondant à une action propre optimale de filtrage du gâteau filtrant pour un passage suffisant du liquide,
b) on détermine tout d'abord une seconde valeur limite pour la différence de pression entre la face polluée et la face épurée, cette seconde valeur limite correspondant à une possibilité insuffisante de passage du liquide à travers le gâteau filtrant,
c) pendant le processus de filtrage on mesure en continu la différence de pression entre la face polluée et la face épurée,
d) lorsqu'est atteinte la première valeur limite de la différence de pression, on envoie du liquide de rinçage à contre-courant sur la surface filtrante, dans la direction allant de la face épurée à la face polluée, et ceci avec une intensité telle que, sans détacher le gâteau filtrant déjà déposé sur la surface filtrante, on interdit ou on retarde la poursuite de la croissance du gâteau filtrant,
e) lorsqu'est atteinte la seconde valeur limite de la différence de pression, on envoie du liquide de rinçage à contre-courant sur la surface filtrante, dans la direction allant de la face épurée à la face polluée, et ceci avec une énergie telle que le gâteau filtrant déposé se détache de la surface filtrante et se décompose en particules solides, ces particules solides étant captées et évacuées.

10. Procédé selon la revendication 9, caractérisé par le fait que l'on envoie chaque fois le liquide de rinçage à contre-courant sur des zones partielles de la surface filtrante et que pendant le processus de rinçage à contre-courant, la surface filtrante se déplace en continu perpendiculairement à la direction de l'écoulement du liquide de rinçage à contre-courant.
